# EUROPEAN PATENT SPECIFICATION

(11) **EP 0 795 254 B1**
(45) Date of publication and mention of the grant of the patent: **05.12.2001**
(21) Application number: 96929470.1
(22) Date of filing: 19.09.1996
(51) Int. Cl.: H04N 7/173, G11B 20/12, G11B 27/034

(54) **METHOD AND SYSTEM FOR READING DATA BLOCKS FOR A NUMBER OF USER GROUPS**
VERFAHREN UND EINRICHTUNG ZUM AUSLESEN VON DATENBLÖCKEN FÜR EINE ANZAHL VON BENUTZERGRUPPEN
PROCEDE ET SYSTEME DE LECTURE DE BLOCS DE DONNEES DESTINES A UNE PLURALITE DE GROUPES D'UTILISATEURS

(30) Priority: 29.09.1995 EP 95202623
(43) Date of publication of application: 17.09.1997
(73) Proprietor: Koninklijke Philips Electronics N.V., 5621 BA Eindhoven (NL); PHILIPS NORDEN AB, 164 85 Stockholm (SE)
(72) Inventor: KORST, Johannes, Henricus, Maria, NL-5656 AA Eindhoven (NL); PRONK, Severius, Petrus, Paulus, NL-5656 AA Eindhoven (NL)
(74) Representative: Groenendaal, Antonius Wilhelmus Maria
(86) International application number: IB9600962
(87) International publication number: WO9713369

(56) References cited:
- EP-A- 0 625 858
- EP-A- 0 633 694
- EP-A- 0 686 908
- EP-A- 0 707 423
- EP-A- 0 731 468
- WO-A-96/13125
- US-A- 5 546 118

## Description

The invention also relates to a method of reading data blocks for a number of user groups from a chain of segments, each of which comprises a physically successively stored part of the data blocks, which method comprises the reading of a given complete segment with data blocks.

The invention also relates to a system for reading data blocks for a number of user groups from a chain of segments, each of which comprises a physically successively stored part of the data blocks, which system comprises read means for reading a given complete segment with data blocks.

Methods and systems of this kind are known in relation to a multimedia server, for example as described in "I/O Issues in a Multimedia System", A.L.N. Reddy and J.C. Wyllie, Computer, IEEE, March 1994, pp. 69-74. A film is stored in segments, each segment comprising a series of successive data blocks. A Near-Video-On-Demand system simultaneously serves a number of user groups. A user group is a station or a sub-system whereto a stream of video data of a given film is applied as from a starting instant. Different user groups can receive video data of the same film as from a respective starting instant. Segments of data blocks are periodically read from a disc in the known system, for example via a double buffer per user group. At the beginning of a period a survey is made as to which data blocks must be fetched during the upcoming period, after which for each user group a segment with data blocks is fetched and stored in the relevant buffer. Design considerations govern the choice of the length of the period and hence the size of the buffers in which a sufficient number of data blocks must fit so as to ensure that the user is supplied with data during a period. It is a drawback of the known methods and systems that a comparatively large amount of storage space is required for the buffers of each user group.

European Patent Application 625 858 describes a system that stores the data blocks of a stream on a series of hard disks in a cyclic order. This allows an increase of the rate at which streams can be retrieved from the disks, since streams are subsequently serviced by different respective disks which reduces the interference between streams.

It is an object of the invention to provide a method and a system for reading data blocks of the kind set forth which require less storage space than the known method and system in the same circumstances. To achieve this, the method of the invention is characterized in that a first data block of the segment read is presented to a first one of the user groups and a second data block of the segment read is presented to a second one of the user groups, said system in accordance with the invention being characterized in that the read means are arranged to present a first data block of the segment read to a first one of the user groups and to present a second data block of the segment read to a second one of the user groups. The reading of a segment with data blocks for different user groups offers the advantage that fewer segments need be fetched per period. As a result, the period in the system in accordance with the invention may be chosen so as to be shorter. In that case fewer data blocks are required to supply a given user group with data during said shorter period, and the size of the buffer in which the data blocks are placed may be chosen so as to be smaller.

Generally speaking, the invention can be used in a system for delivering films and interactive services to users as described in European Patent Application 779010 A1 (PHN 15.370) in the name of Applicant of the present Application. The system in accordance with the cited Application enables the schedule of films and services offered to the users to be maintained in a simple and consistent manner.

The invention can also be used, generally speaking, in a multimedia system for use in a video server as described in European Patent Application 781435 A1 (PHN 15.381) in the name of Applicant of the present Application. In the cited system the data is stored in clusters, the part of the data at the end of a cluster being repeated at the beginning of the next cluster so as to achieve a shorter user response time.

Furthermore the invention is also related, generally speaking, to the system described in corresponding European Patent Application 525 894 A1 (PHN 13.797) in the name of Applicant of the present Application. This system dispatches a message, for example a video film, to a user in segments, earlier segments being dispatched more often than later segments.

Further attractive embodiments of the methods and systems in accordance with the invention are disclosed in dependent claims.

The invention will be described in detail hereinafter, by way of example, with reference to the drawing.

In the drawing:
Fig. 1 shows diagrammatically the principle of the known system for reading data blocks,
Fig. 2 shows the storage of data blocks in the known system,
Fig. 3 shows the storage of data blocks in the system in accordance with the invention,
Fig. 4 shows diagrammatically the use of the invention in a system as shown in Fig. 1,
Fig. 5 shows diagrammatically the system for storing data blocks in accordance with the invention, and
Fig. 6 shows diagrammatically a write surface subdivided into annular regions.

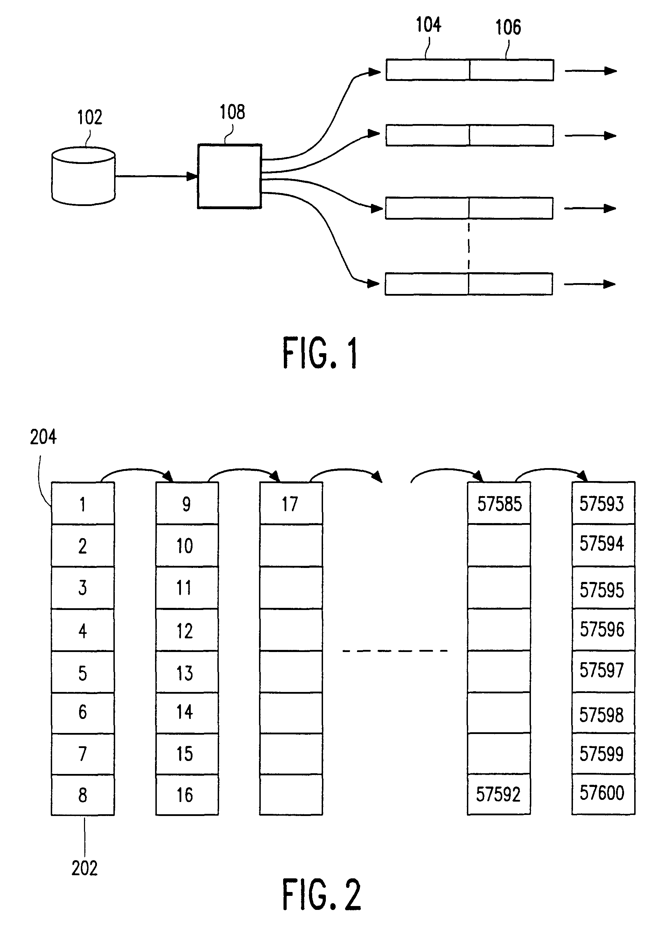

Fig. 1 shows diagrammatically the principle of the known system for reading data blocks. N films are stored on a disc 102 of the video server, each film being shown to the users with a number of different starting instants. For the sake of simplicity it is assumed that the playing time of each film is two hours and that it is started every fifteen minutes. In that case 8 versions of each of the N films will be played in parallel at a given instant, so that the system can serve 8 x N different user groups. For each user group the system comprises a buffer 104 and a buffer 106 via which data of a film is presented to the user group. While the data from one buffer, for example 106, is being presented to the user, the other buffer 104 is available so as to be filled with a next part of the data of a film by the disc interface section 108 of the system. At the instant at which the buffer 106 becomes empty the functions of the buffers are reversed and the user receives the data from the buffer 104. The system operates in so-called fixed-duration periods in which the necessary data blocks are fetched. At the beginning of a period it is established which segments with data blocks must be fetched. Subsequently, during this period the system fetches the necessary data blocks from the disc and places the blocks in the relevant buffers. The system is designed so that a buffer of a user group can contain a sufficient number of data blocks so as to provide the user group with data during the next period. A version of the known system has a period duration of 1 second and a buffer size of approximately 200 Kb. On the basis of the above mathematical example, every second the system should fetch 8 x N segments from the disc and place them in the buffers of the user groups. For each user group use can also be made, however, of three or more buffers which are cyclically filled and read.

Fig. 2 shows the storage of data blocks in the known system. The set of data blocks may concern, for example a video film. The set is subdivided into logically successive segments 202. In order to enable efficient reading of the disc, each segment is composed of a number of physically successive data blocks 204. The reading of such a segment on the disc requires only one seek operation, after which all data blocks of the segment can be read and placed in the relevant buffer. In the present example the size of a segment is 200 Kb and the segment comprises 8 data blocks of 25 Kb each. A film having a length of 2 hours will then comprise 7,200 segments in total, i.e. one segment for each second of film, corresponding to 57,600 data blocks. Each data block contains data of a piece of the film and has a fixed sequence number which indicates the position of the relevant piece in the film. Successive groups of data blocks are stored in successive segments and such a group is read from the disc in one operation in order to be placed in a relevant buffer. Segments may be situated in arbitrary locations on the disc.

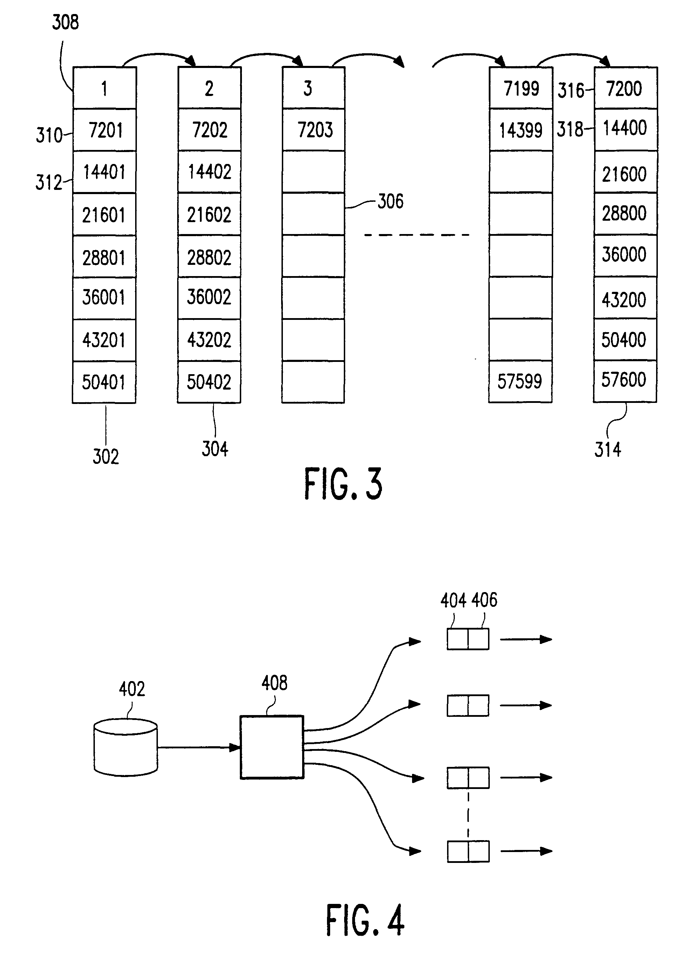

Fig. 3 shows the storage of data blocks in the system in accordance with the invention. The set of data blocks, for example a video film, is subdivided into logically successive segments 302, 304 and so on, each of which comprises 8 data blocks such as 306. The data blocks in one segment, however, in this case do not represent contiguous pieces of the film, but pieces exhibiting a given time difference. The magnitude of the time difference equals the desired period of time between the starting instants of the film. In this case 8 starting instants are desired and, therefore, a segment contains 8 data blocks which have been shifted fifteen minutes with respect to one another. The first segment 302 contains the first data block 308 of the film and the data block 310 after exactly fifteen minutes of film, the data block 312 after exactly thirty minutes of film, etc. The second segment 304 contains data blocks which are situated 1/8 second further in the film relative to the first segment. The last segment 314 contains the data blocks which exactly complete the period of time between two starting instants: data blocks 308 up to and including the data block 316 constitute the first fifteen minutes of the film, the data blocks 310 up to and including 318 constitute the second fifteen minutes, etc. A segment in the system in accordance with the invention can also be found by one seek operation on the disc, after which it can be read. The data blocks of the segment read, however, in this case are not all assigned to the buffer of one user group, but are distributed between the buffers on the basis of correspondence of the starting instant. A segment in Fig. 3 contains the data blocks in an ascending order of position of the data block in the film, but this is not necessarily so. It suffices when the relevant data blocks are present within one segment and can be quickly read from the disc by one seek operation. The system can subsequently place the blocks in the appropriate buffers, for example on the basis of a position number or time indication of the data blocks.

Fig. 4 shows diagrammatically the use of the invention in a system as described with reference to Fig. 1. Based on the example used therein, the system comprises a disc 402 with N films, each of which has 8 different starting instants. Therefore, the system also has 8 x N different user groups which receive their data via buffers 404 and 406. The system, however, comprises segments which are composed as shown in Fig. 3 so that it can serve 8 user groups by fetching one segment. The disc interface 408 reads a segment with data blocks from the disc and distributes the data blocks between the relevant buffers of the user groups. Therefore, during one period the system in accordance with the invention need fetch only N segments whereas the known system must fetch 8 x N segments. The duration of the period can be chosen to be proportionally shorter in the system in accordance with the invention, i.e. 1/8 second because only 1/8 of the number of segments need be fetched. The shorter period offers the advantage that fewer data blocks need be stocked in the buffers of the user groups. This is because a shorter period of time until the next segment has been fetched need be spanned. Because fewer data blocks are required in the buffers, the buffers may be designed so as to be proportionally smaller. In the mathematical example given above, involving the original buffers of 200 Kb and the 8 different starting instants, the buffers in the system in accordance with the invention need only be 25 Kb. This results in a very large saving in respect of the storage space required by such a system. If the system offers 20 films in the above example, a saving of 56,000 Kb in respect of storage space is already achieved. In the case of larger numbers of films and/or smaller differences between the starting instants, the saving may be much larger. In addition to the N films presented at a given instant, the disc may also contain a file of other films which are to be presented at a later instant.

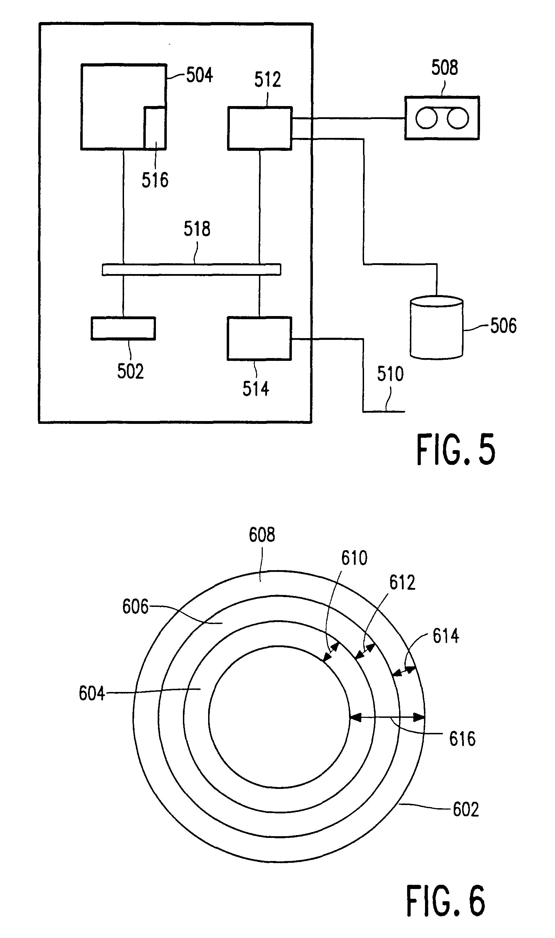

The segments to be read in a given period may be situated at arbitrary locations on the disc. Therefore, the system is designed so that the read head can radially traverse the entire disc surface during a period. The use of the invention results in the situation in which fewer segments need be fetched during the shorter period, be it that in principle said segments may still be situated at arbitrary locations on the disc. This means that in the system in accordance with the invention the read head must still be capable of traversing the entire disc surface during the shorter period. However, it is possible to arrange the segments on the disc in such a manner that all segments to be fetched in a given period are situated in a given annular region on the disc. In that case the read head need be capable of radially traversing only this region instead of the entire disc surface. Fig. 6 shows diagrammatically a disc surface subdivided into annular regions. In this example the disc has a disc surface 602 with 3 annular regions, i.e. 604, 606 and 608. The segments to be read during a given period are situated in the region 604, the segments to be read in the next period being situated in the region 606, etc. During the reading of the disc, the read head need travel only the short distance 610 or 612 or 614 in one period instead of the total radial distance 616 in order to read segments. In successive periods, the regions are approached from the inside towards the periphery and subsequently from the periphery towards the inside again.

The disc of the system will usually have to contain more than one film. In that case different structures in conformity with Fig. 3 can be stored independently of one another. For each film a segment should then be fetched in each period. However, it is also possible to combine data blocks of two or more films in one segment, subject to the condition that the data blocks relate to one and the same starting instant. This results in a further reduction of the number of segments to be fetched per period. The data blocks of all films can be combined in this manner, so that per period it is only necessary to fetch one segment which then contains a data block for each user group. This results in a further reduction of the required buffer storage space.

Fig. 5 shows diagrammatically the essential components of the system for storing data blocks in accordance with the invention. The system serves to receive data blocks from a given source in order to store these blocks on a storage medium as described with reference to Fig. 3. The system is constructed on the basis of a general-purpose computer which is provided with the appropriate programs for this purpose. The system comprises a processor 502 for executing the programs which are loaded into the memory 504 for this purpose. The system comprises an apparatus with a storage medium for the storage of the file, for example a disc unit with one or more discs 506. The system also comprises apparatus via which the data blocks can be applied to the system. Supply may take place via a tape 508 and/or a network link 510, but other apparatus are also feasible. The system comprises an interface section 512 for the exchange of data blocks with the write unit and the tape unit, and an interface section 514 for the exchange of data blocks with the network link. The system may also comprise a buffer 516 which is accommodated in a part of the memory and via which the data blocks can be transferred from one apparatus to another. The system also comprises a bus 518 for the exchange of commands and data blocks between the various parts of the system.

Figs. 4 and 5 show separate systems for the reading and writing of the data blocks from and onto the disc. Evidently, the two systems can be combined so as to form one system which stores the films on a disc in an appropriate manner as described above as well as reads the films from the disc for presentation to the various user groups.

The invention can also be used in a system which utilizes one disc for the storage of films, but also in a system which utilizes several discs. In the latter case the invention can be used in combination with other techniques for enhanced system performance. An example of such a technique is the distribution of a data block between several discs in order to achieve a higher reading speed in comparison with the situation where the data block is read from one disc. This technique is referred to as "striping" and can be combined with the invention by composing a segment of data blocks in a manner as described with reference to Fig. 3. It is an essential aspect of the invention that a segment contains data blocks which can be presented to various user groups, so that the period of the system can be shortened. The method of storage, for example on different discs, is irrelevant in this respect.

The use of the invention results in a shorter period for the reading of segments from the disc. As has already been stated, the segments to be fetched may be distributed across the entire disc, so that the full saving resulting from the ratio of the shorter period to the original period cannot be achieved. This is because time is still required to traverse the entire disc. As an alternative to the previously described solution involving annular regions, this problem can also be solved by choosing the period to be slightly longer than the value resulting from said ratio. In other words, instead of the 1/8 seconds resulting from the mathematical example, for example 0.15 second is chosen. Even though the buffers of the user groups must then also be larger, in comparison with the known systems a substantial saving in respect of storage space is achieved still.

## Claims

1. A method of reading data blocks for a number of user groups from a chain of segments, each of which comprises a physically successively stored part of the data blocks, which method comprises the reading of a given complete segment with data blocks,
**characterized in that**
a first data block of the segment read is presented to a first one of the user groups and a second data block of the segment read is presented to a second one of the user groups.

2. A method as claimed in Claim 1, **characterized in that** a segment comprises a number of data blocks which equals said number of user groups, and that each data block of the segment read is presented to a respective user group.

3. A method as claimed in Claim 1 or 2, **characterized in that** a data block contains digital video information.

4. A system for reading data blocks for a number of user groups from a chain of segments, each of which comprises a physically successively stored part of the data blocks, which system comprises read means for reading a given, complete segment with data blocks, **characterized in that**
the read means are arranged to present a first data block of the segment read to a first one of the user groups and to present a second data block of the segment read to a second one of the user groups.

5. A system as claimed in Claim 4, **characterized in that** a segment comprises a number of data blocks which equals said number of user groups, and that the read means are arranged to present each data block of the segment read to a respective user group.

## Patentansprüche

1. Verfahren des Auslesens von Datenblöcken für eine Anzahl Benutzergruppen aus einer Kette von Segmenten, von denen jedes einen physikalisch hintereinander gespeicherten Teil der Datenblöcke enthält, wobei das Verfahren das Auslesen eines gegebenen vollständigen Segmentes mit Datenblöcken umfasst,
**dadurch gekennzeichnet, dass**
ein erster Datenblock des ausgelesenen Segmentes einer ersten der Benutzergruppen angeboten wird und ein zweiter Datenblock des ausgelesenen Segmentes einer zweiten der Benutzergruppen.

2. Verfahren nach Anspruch 1, **dadurch gekennzeichnet, dass** ein Segment eine Anzahl Datenblöcke umfasst, die gleich der genannten Anzahl Benutzergruppen ist, und dass jeder Datenblock des ausgelesenen Segmentes einer jeweiligen Benutzergruppe angeboten wird.

3. Verfahren nach Anspruch 1 oder 2, **dadurch gekennzeichnet, dass** ein Datenblock digitale Videoinformation enthält.

4. System zum Auslesen von Datenblöcken für eine Anzahl Benutzergruppen aus einer Kette von Segmenten, von denen jedes einen physikalisch hintereinander gespeicherten Teil der Datenblöcke enthält, wobei das System Auslesemittel zum Auslesen eines gegebenen vollständigen Segmentes mit Datenblöcken umfasst,
**dadurch gekennzeichnet, dass**
die Auslesemittel ausgebildet sind, um einen ersten Datenblock des ausgelesenen Segmentes einer ersten der Benutzergruppen anzubieten und einen zweiten Datenblock des ausgelesenen Segmentes einer zweiten der Benutzergruppen.

5. System nach Anspruch 4, **dadurch gekennzeichnet, dass** ein Segment eine Anzahl Datenblöcke umfasst, die gleich der genannten Anzahl Benutzergruppen ist, und dass die Auslesemittel ausgebildet sind, um jeden Datenblock des ausgelesenen Segmentes einer jeweiligen Benutzergruppe anzubieten.

## Revendications

1. Procédé de lecture de blocs d'informations pour un certain nombre de groupes d'utilisateurs à partir d'une chaîne de segments, chacun d'eux comprenant une partie des blocs d'informations physiquement et successivement stockée, lequel procédé comprend la lecture d'un segment complet donné avec les blocs d'informations, **caractérisé en ce qu'**un premier bloc d'informations du segment lu est présenté à un premier groupe d'utilisateurs et un deuxième bloc d'informations du segment lu est présenté à un deuxième groupe d'utilisateurs.

2. Procédé suivant la revendication 1, **caractérisé en ce qu'**un segment comprend un nombre de blocs d'informations qui est égal audit nombre de groupes d'utilisateurs, et **en ce que** chaque bloc d'informations du segment lu est présenté à un groupe d'utilisateurs respectif.

3. Procédé suivant la revendication 1 ou 2, **caractérisé en ce qu'**un bloc d'informations contient des informations vidéo numériques.

4. Système pour lire des blocs d'informations pour un certain nombre de groupes d'utilisateurs à partir d'une chaîne de segments, chacun d'eux comprenant une partie des blocs d'informations physiquement et successivement stockée, lequel système comprend un moyen de lecture pour lire un segment complet donné avec des blocs d'informations, **caractérisé en ce que** le moyen de lecture est agencé de manière à présenter un premier bloc d'informations du segment lu au premier des groupes d'utilisateurs et pour présenter un deuxième bloc d'informations du segment lu au deuxième des groupes d'utilisateurs.

5. Système suivant la revendication 4, **caractérisé en ce qu'**un segment comprend un nombre de blocs d'informations qui est égal audit nombre de groupes d'utilisateurs, et **en ce que** le moyen de lecture est agencé de manière à présenter chaque bloc d'informations du segment lu à un groupe respectif d'utilisateurs.
